# EUROPEAN PATENT APPLICATION

(11) **EP 3 242 510 A1**
(43) Date of publication of application: **08.11.2017**
(21) Application number: 16746718.2
(22) Date of filing: 05.02.2016
(51) Int. Cl.: H04W 36/28, H04W 36/18, H04W 72/04, H04W 88/16

(54) **BASE STATION**

(30) Priority: 06.02.2015 US 201562112764 P
(71) Applicant: Kyocera Corporation, Kyoto-shi, Kyoto 612-8501 (JP)
(72) Inventor: NAGASAKA, Yushi, Kyoto-shi Kyoto 612-8501 (JP); FUJISHIRO, Masato, Kyoto-shi Kyoto 612-8501 (JP); MITSUI, Katsuhiro, Kyoto-shi Kyoto 612-8501 (JP)
(74) Representative: Schwabe - Sandmair - Marx
(86) International application number: PCT/JP2016/053479
(87) International publication number: WO 2016/125887

(57) **Abstract**

A base station is capable of executing a dual connectivity scheme. The base station includes: a receiver configured to receive, from a source base station, a handover request for causing a user terminal to perform a handover from the source base station to the base station; and a transmitter configured to transmit, when the handover request includes an identifier indicating a secondary base station executing the dual connectivity scheme with the user terminal, an addition request to the secondary base station corresponding to the identifier, the addition request requesting provision of additional radio resources to the user terminal in the dual connectivity scheme. The transmitter transmits the addition request including split bearer information indicating that a data path passing through the base station and the secondary base station is established between a gateway apparatus connected with the base station and the user terminal.

## Description

### TECHNICAL FIELD

The present application relates to a base station capable of executing a dual connectivity scheme.

### BACKGROUND ART

In 3rd Generation Partnership Project (3GPP) which is a mobile communication system standardization project, a dual connectivity scheme (dual connectivity) is scheduled to be introduced in Release 12 or later (see Non Patent Literature 1). In the dual connectivity scheme, a user terminal establishes a connection with each of a plurality of base stations. Since radio resources are allocated from a plurality of base stations, the throughput is expected to be improved.

In the dual connectivity scheme, only one base station (hereinafter referred to as a "master base station") among a plurality of base stations establishing a connection with the user terminal establishes an RRC connection with the user terminal. On the other hand, other base stations (hereinafter referred to as "secondary base stations") among a plurality of base stations provides additional radio resources to the user terminal.

### CITATION LIST

### NON PATENT LITERATURE

Non Patent Literature 1: 3GPP technical report "TR 36.842 V12.0.0" January 7,2014

### SUMMARY OF INVENTION

A base station according to a first feature is capable of executing a dual connectivity scheme. The base station includes: a receiver configured to receive, from a source base station, a handover request for causing a user terminal to perform a handover from the source base station to the base station; and a transmitter configured to transmit, when the handover request includes an identifier indicating a secondary base station executing the dual connectivity scheme with the user terminal, an addition request to the secondary base station corresponding to the identifier, the addition request requesting provision of additional radio resources to the user terminal in the dual connectivity scheme. The transmitter transmits the addition request including split bearer information indicating that a data path passing through the base station and the secondary base station is established between a gateway apparatus connected with the base station and the user terminal.

A base station according to a second feature is capable of executing a dual connectivity scheme. The base station includes: a receiver configured to receive, from the source base station, a handover request for causing a user terminal to perform a handover from a source base station to the base station; a transmitter configured to transmit, when the handover request includes an identifier indicating a secondary base station executing the dual connectivity scheme to the user terminal, an addition request to the secondary base station corresponding to the identifier, the addition request requesting provision of additional radio resources to the user terminal in the dual connectivity scheme; and a controller configured to notify an upper node of a request for establishing a data path not passing through the base station between the gateway apparatus and the user terminal via the secondary base station when the gateway apparatus to which the base station is connected is not connected with the secondary base station.

### BRIEF DESCRIPTION OF DRAWINGS

Fig. 1 is a block diagram of an LTE system according to an embodiment.
Fig. 2 is a block diagram of a UE according to the embodiment.
Fig. 3 is a block diagram of an eNB according to the embodiment.
Fig. 4 is a protocol stack diagram of a radio interface according to the embodiment.
Fig. 5 is a diagram for describing an overview of a dual connectivity scheme.
Fig. 6 is a diagram illustrating a first UP architecture.
Fig. 7 is a diagram illustrating a second UP architecture.
Fig. 8 is a diagram for describing an operating environment according to the embodiment.
Fig. 9 is a diagram for describing an operation according to the embodiment.
Fig. 10 is a diagram for describing an operation according to a first modified example of the embodiment.
Fig. 11 is a diagram for describing an operation according to a second modified example of the embodiment.

### DESCRIPTION OF EMBODIMENTS

### [Overview of Embodiment]

A method in which a user terminal which is executing the dual connectivity scheme executes a handover from a master base station (a source base station) to a target base station while maintaining a connection with a secondary base station, and continues the dual connectivity scheme using the target base station as a new master base station is not specified in a current specification.

Therefore, when the secondary base station executes the dual connectivity scheme that does not change before and after the handover, the user terminal terminates the dual connectivity scheme once, and after completion of the handover, the user terminal is able to exchange signaling for initiating the dual connectivity scheme using the target base station (the new master base station) and the secondary base station with the target base station. As a result, the radio resources for user data decreases, and the load on the user terminal and the target base station increases.

In this regard, an embodiment provides a base station capable of suppressing the occurrence of signaling between the user terminal and the target base station when the secondary base station executes the dual connectivity scheme that does not change before and after the handover.

A base station according to an embodiment is capable of executing a dual connectivity scheme. The base station includes: a receiver configured to receive, from a source base station, a handover request for causing a user terminal to perform a handover from the source base station to the base station; and a transmitter configured to transmit, when the handover request includes an identifier indicating a secondary base station executing the dual connectivity scheme with the user terminal, an addition request to the secondary base station corresponding to the identifier, the addition request requesting provision of additional radio resources to the user terminal in the dual connectivity scheme. The transmitter transmits the addition request including split bearer information indicating that a data path passing through the base station and the secondary base station is established between a gateway apparatus connected with the base station and the user terminal.

In an embodiment, the transmitter is configured to transmit the addition request including the split bearer information when the secondary base station is connected to another gateway apparatus other than the gateway apparatus.

In an embodiment, the transmitter is configured to transmit the addition request including the split bearer information together with the identifier when the handover request includes information indicating that a data path not passing through the source base station is established between the gateway apparatus connected with the secondary base station and the user terminal via the secondary base station.

In an embodiment, the receiver is configured to receive non-transmitted data which has not yet been transmitted to the user terminal and has not yet been encrypted from the source base station. The non-transmitted data includes non-transmitted data which is transferred from the other base station to the source base station.

In a first modified example of the embodiment, the receiver is configured to receive non-transmitted data which has not yet been transmitted to the user terminal and has not yet been encrypted from each of the source base station and the other base station.

A base station according to a second modified example of the embodiment is capable of executing a dual connectivity scheme. The base station includes: a receiver configured to receive, from the source base station, a handover request for causing a user terminal to perform a handover from a source base station to the base station; a transmitter configured to transmit, when the handover request includes an identifier indicating a secondary base station executing the dual connectivity scheme to the user terminal, an addition request to the secondary base station corresponding to the identifier, the addition request requesting provision of additional radio resources to the user terminal in the dual connectivity scheme; and a controller configured to notify an upper node of a request for establishing a data path not passing through the base station between the gateway apparatus and the user terminal via the secondary base station when the gateway apparatus to which the base station is connected is not connected with the secondary base station.

A "base station" used in claims set forth below is a concept including not only a general base station (an eNB) but also a remote radio head (RRH) base station.

### [Embodiment]

An embodiment in which the present application is applied to an LTE system will be described below.

### (System Configuration)

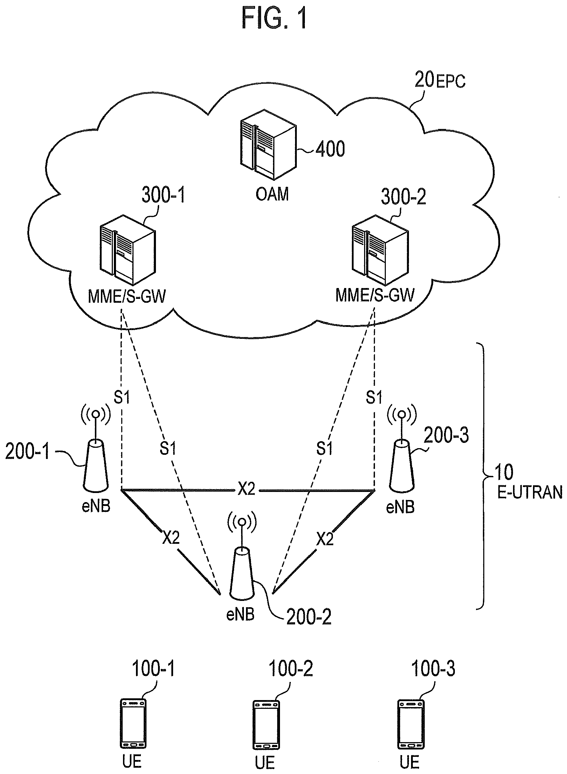

Fig. 1 is a block diagram of an LTE system according to an embodiment.

The LTE system according to the embodiment includes user equipment (UE) 100, an evolved-UMTS terrestrial radio access network (E-UTRAN) 10, and an evolved packet core (EPC) 20 as illustrated in Fig. 1.

The UE 100 corresponds to user terminal. The UE 100 is a mobile communication apparatus and performs radio communication with a cell (a serving cell). A configuration of the UE 100 will be described later.

The E-UTRAN 10 corresponds to a radio access network. The E-UTRAN 10 includes an evolved node-B (eNB) 200. The eNB 200 corresponds to a base station. The eNBs 200 are connected to each other via an X2 interface. A configuration of the eNB 200 will be described later.

The eNB 200 manages one or more cells and performs radio communication with the UE 100 that has established a connection with a cell thereof. The eNB 200 has a radio resource management (RRM) function, a user data routing function, a measurement control function for mobility control/scheduling, and the like. In addition to a term indicating a minimum unit of a radio communication area, "cell" is also used as a term indicating a function performing radio communication with the UE 100.

The EPC 20 corresponds to a core network. The EPC 20 includes a mobility management entity (MME)/serving-gateway (S-GW) 300 and an operation and maintenance (OAM) 400.

The MME performs various kinds of mobility control or the like on the UE 100. The SGW performs user data transfer control. The MME/S-GW 300 is connected to the eNB 200 via an S1 interface.

The OAM 400 is a server apparatus managed by an operator and performs maintenance and monitoring of the E-UTRAN 10.

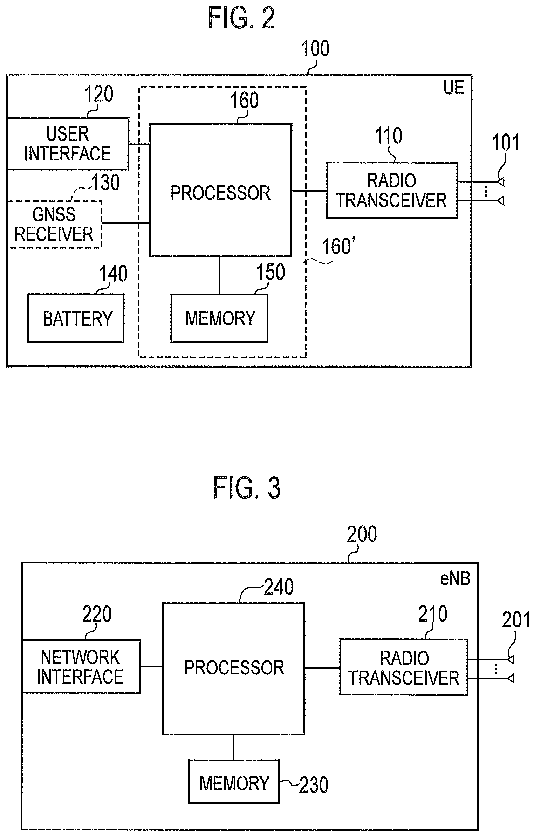

Fig. 2 is a block diagram of the UE 100. The UE 100 includes a plurality of antennas 101, a radio transceiver 110, a user interface 120, a global navigation satellite system (GNSS) receiver 130, a battery 140, a memory 150, and a processor 160 as illustrated in Fig. 2. The memory 150 and the processor 160 constitute a controller. The UE 100 may not include the GNSS receiver 130. Further, the memory 150 may be integrated with the processor 160, and this set (that is, a chipset) may be used as a processor 160'.

The antenna 101 and the radio transceiver 110 are used for transmission and reception of radio signals. The radio transceiver 110 converts a baseband signal (a transmission signal) output from the processor 160 into a radio signal and transmits the radio signal from the antenna 101. In addition, the radio transceiver 110 converts a radio signal received by the antenna 101 into a baseband signal (a reception signal) and outputs the baseband signal to the processor 160.

The user interface 120 is an interface with a user who owns the UE 100, and includes, for example, a display, a microphone, a speaker, various buttons, or the like. The user interface 120 receives an operation from the user and outputs a signal indicating content of the operation to the processor 160. The GNSS receiver 130 receives a GNSS signal and outputs the received signal to the processor 160 in order to obtain position information indicating a geographical position of the UE 100. The battery 140 stores electric power to be supplied to the blocks of the UE 100.

The memory 150 stores a program executed by the processor 160 and information used for a process performed by the processor 160. The processor 160 includes a baseband processor that performs modulation/demodulation, encoding/decoding, and the like of the baseband signal and a central processing unit (CPU) that performs various kinds of processes by executing the program stored in the memory 150. The processor 160 may further include a codec that encodes and decodes audio and video signals. The processor 160 executes various kinds of processes to be described later and various kinds of communication protocols.

Fig. 3 is a block diagram of the eNB 200. The eNB 200 includes a plurality of antennas 201, a radio transceiver 210, a network interface 220, a memory 230, and a processor 240 as illustrated in Fig. 3. The memory 230 and the processor 240 constitute a controller. Further, the memory 230 may be integrated with the processor 240, and this set (that is, a chipset) may be used as a processor.

The antenna 201 and the radio transceiver 210 are used for transmission and reception of radio signals. The radio transceiver 210 converts a baseband signal (a transmission signal) output from the processor 240 into a radio signal and transmits the radio signal from the antenna 201. Further, the radio transceiver 210 converts a radio signal received by the antenna 201 into a baseband signal (a reception signal) and outputs the baseband signal to the processor 240.

The network interface 220 is connected to a neighbor eNB 200 via the X2 interface and connected to the MME/S-GW 300 via an S1 interface. The network interface 220 is used for communication performed on the X2 interface and communication performed on the S1 interface.

The memory 230 stores a program executed by the processor 240 and information used for a process performed by the processor 240. The processor 240 includes a baseband processor that performs modulation/demodulation, encoding/decoding, and the like of the baseband signal and a CPU that performs various kinds of processes by executing the program stored in the memory 230. The processor 240 executes various kinds of processes to be described later and various kinds of communication protocols.

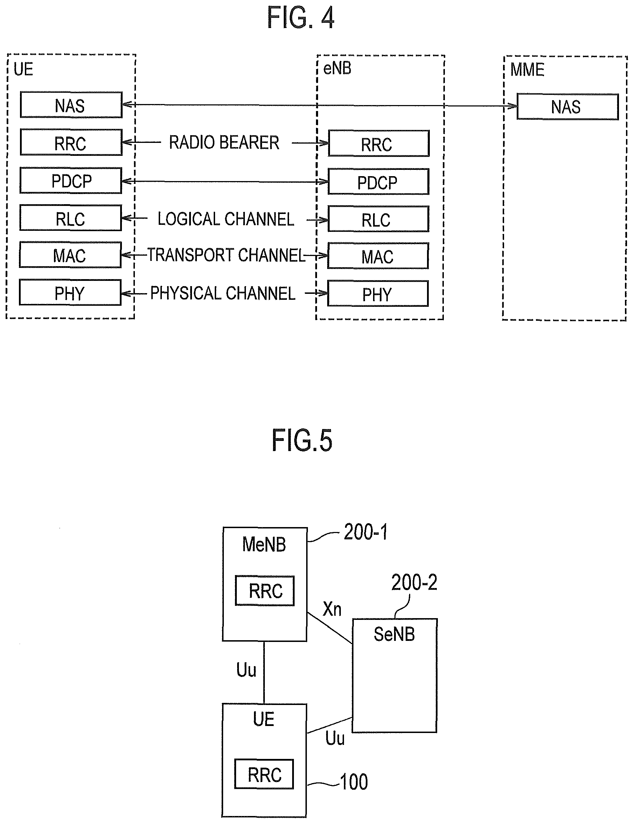

Fig. 4 is a protocol stack diagram of a radio interface in the LTE system. As illustrated in Fig. 4, the radio interface protocol is divided into first to third layers of an OSI reference model, and the first layer is a physical (PHY) layer. The second layer includes a medium access control (MAC) layer, a radio link control (RLC) layer, and a packet data convergence protocol (PDCP) layer. The third layer includes a radio resource control (RRC) layer.

The physical layer performs encoding/decoding, modulation/demodulation, antenna mapping/demapping, and resource mapping/demapping. User data and a control signal are transmitted between the physical layer of the UE 100 and the physical layer of the eNB 200 via the physical channel.

The MAC layer performs priority control of data, a retransmission process by hybrid ARQ (HARQ), a random access procedure when the RRC connection is established, and the like. User data and a control signal are transmitted between the MAC layer of the UE 100 and the MAC layer of the eNB 200 via the transport channel. The MAC layer of the eNB 200 includes a scheduler that decides uplink and downlink transport formats (a transport block size and a modulation and coding scheme) and an allocated resource block for the UE 100.

The RLC layer transmits data to the RLC layer on a reception side using the functions of the MAC layer and the physical layer. User data and a control signal are transmitted between the RLC layer of the UE 100 and the RLC layer of the eNB 200 via a logical channel.

The PDCP layer performs header compression/decompression and encryption/decryption.

The RRC layer is defined only on a control plane for dealing with a control signal. A control signal (an RRC message) for various kinds of settings is transmitted between the RRC layer of the UE 100 and the RRC layer of the eNB 200. The RRC layer controls logical channels, transport channels, and physical channels in accordance with establishment, re-establishment, and release of a radio bearer. When there is a connection (RRC connection) between the RRC of the UE 100 and the RRC of the eNB 200, the UE 100 is in an RRC connected state, and otherwise, the UE 100 is in an RRC idle state.

A non-access stratum (NAS) layer located above the RRC layer performs session management, mobility management, and the like.

In the LTE system, orthogonal frequency division multiple access (OFDMA) is applied to downlink, and Single Carrier Frequency Division Multiple Access (SC-FDMA) is applied to uplink.

The radio frame includes ten subframes arranged in a time direction. Each subframe includes two slots arranged in the time direction. A length of each subframe is 1 ms, and a length of each slot is 0.5 ms. Each subframe includes a plurality of resource blocks (RB) in a frequency direction and includes a plurality of symbols in a time direction. Each resource block includes a plurality of subcarriers in the frequency direction. Among the radio resources (time/frequency resources) allocated to the UE 100, frequency resources is able to be specified by resource blocks, and time resources is able to be specified by subframes (or slots).

In the downlink, an interval of first few symbols of each subframe is an area used mainly as a physical downlink control channel (PDCCH) for transmitting a control signal. The remaining intervals of each subframe are areas that are able to be mainly used as a physical downlink shared channel (PDSCH) for transmitting downlink data.

In the uplink, both end portions of each subframe in the frequency direction are areas used mainly as a physical uplink control channel (PUCCH) for transmitting a control signal. The other part in each subframe is an area that is able to be used mainly as a physical uplink shared channel (PUSCH) for transmitting user data.

### (Dual Connectivity Scheme)

The LTE system according to the embodiment supports the dual connectivity scheme. The dual connectivity scheme is scheduled to be introduced in Release 12 or later. In the dual connectivity scheme, the UE 100 simultaneously establishes connections with a plurality of eNBs 200. Since the radio resources are allocated from each of the eNBs 200 to the UE 100, the throughput is expected to be improved. The dual connectivity scheme may also be referred to as an inter-eNB 200 carrier aggregation (inter-eNB CA).

Fig. 5 is a diagram for describing an overview of the dual connectivity scheme.

In the dual connectivity scheme, only a master eNB (MeNB) 200-1 among a plurality of eNBs 200 establishing a connection with a UE 100 establishes the RRC connection with the UE 100 as illustrated in Fig. 5. In contrast, a secondary eNB (SeNB) 200-2 among a plurality of eNBs 200 does not establish the RRC connection with the UE 100 but provides additional radio resources to the UE 100. In other words, the MeNB 200-1 establishes not only a user plane connection but also a control plane connection with the UE 100. In contrast, the SeNB 200-2 establishes the user plane connection with the UE 100 without establishing the control plane connection with the UE 100. An Xn interface is set between the MeNB 200-1 and the SeNB 200-2. The Xn interface is the X2 interface or a new interface.

In the dual connectivity scheme, the UE 100 can perform the carrier aggregation using N cells managed by the MeNB 200-1 and M cells managed by the SeNB 200-2 at the same time. In the dual connectivity scheme, a maximum of the number of serving cells of the UE 100, that is, a maximum number of (N + M) is, for example, 5. Here, a group of N cells managed by the MeNB 200-1 is referred to as a "master cell group (MCG)." Further, a group of M cells managed by the SeNB 200-2 is referred to as a "secondary cell group (SCG)." In the SCG, a special cell in which the PUCCH of the UE 100 is provided is set. The special cell performs some functions of a primary cell (PCell) in the carrier aggregation. Hereinafter, this special cell is referred to as a "Primary SCell (PSCell)."

The MeNB 200-1 is an eNB 200 at which at least the S1 interface for the control plane ends in the dual connectivity scheme. The MeNB 200-1 transmits all RRC messages to the UE 100 that is set for the dual connectivity scheme via the MCG. On the other hand, the SeNB 200-2 provides additional radio resources to the UE 100 in the dual connectivity scheme. Further, the SeNB 200-2 is not the MeNB 200-1.

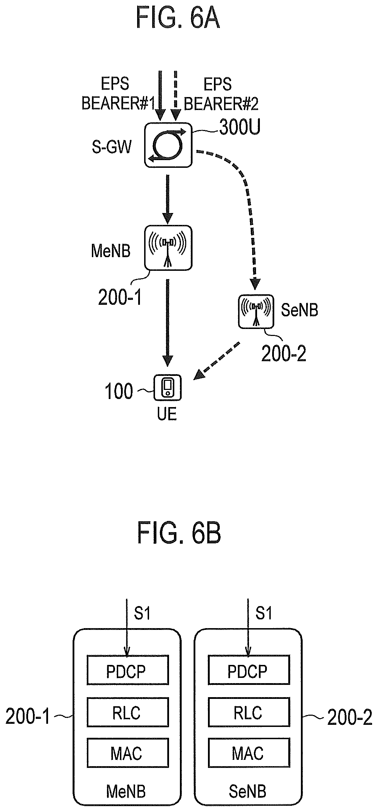

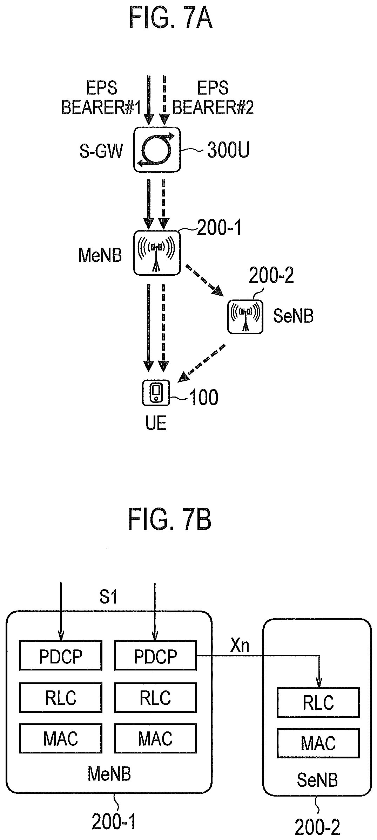

Figs. 6 and 7 are diagrams for describing a method of constituting a user data transfer path (data path) in the dual connectivity scheme. There are mainly two types of user plane architectures (UP architectures) that constitute the user data transfer path (data path) in the dual connectivity scheme.

Fig. 6 illustrates a first UP architecture. In the first UP architecture, an S1-U interface between an MeNB 200-1 and an S-GW 300U and an S1-U interface between an SeNB 200-2 and the S-GW 300U are used as illustrated in Fig. 6(A). An EPS bearer #1 between the UE 100 and the P-GW passes through the S1-U interface between the MeNB 200-1 and the S-GW 300U. The EPS bearer #1 is also referred to as an "MCG bearer." The EPS bearer #2 between the UE 100 and the P-GW passes through the S1-U interface between the SeNB 200-2 and the S-GW 300U. The EPS bearer #2 is also referred to as an "SCG bearer." As described above, in the first UP architecture, the data path between the SeNB 200-2 and the S-GW 300U does not pass through the MeNB 200-1. Each of the MeNB 200-1 and the SeNB 200-2 performs processes of the PDCP layer, the RLC layer, and the MAC layer as illustrated in Fig. 6(B).

Fig. 7 illustrates a second UP architecture. In the second UP architecture, an EPS bearer #2 between a UE 100 and a P-GW is split in an MeNB 200-1, one split bearer ends at the UE 100 via the SeNB 200-2, and the other split bearer) ends at the UE 100 without going through the SeNB 200-2 as illustrated in Fig. 7(A). As described above, in the second UP architecture, the data path between the SeNB 200-2 and the S-GW 300U goes through the MeNB 200-1. As illustrated in Fig. 7(B), for one (split bearer) which is split in the EPS bearer #2, processes of the respective layers are performed through the PDCP of the MeNB 200-1 and the RLC and the MAC of SeNB 200-2. For the split bearer, the MeNB may undertake the processes of up to the RLC (or some functions of the RLC).

### (Operation According to Embodiment)

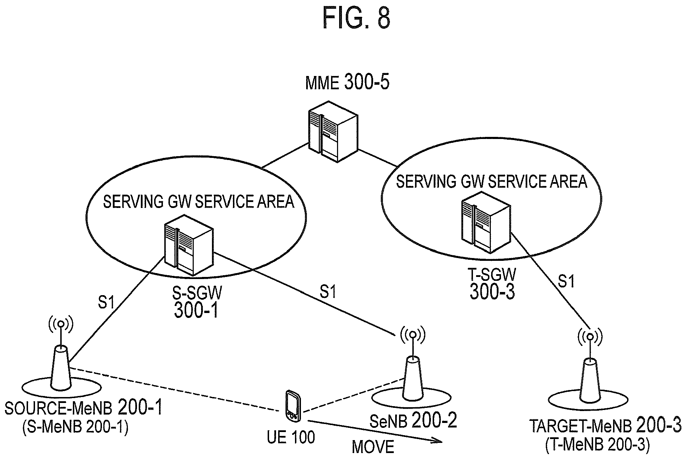

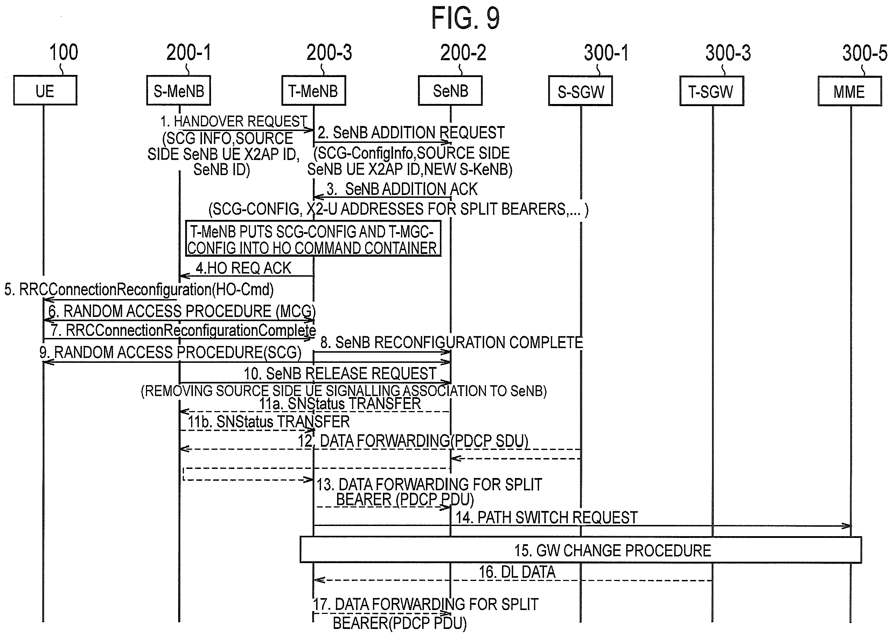

Next, an operation according to the embodiment will be described with reference to Figs. 8 and 9. Fig. 8 is a diagram for describing an operating environment according to the embodiment. Fig. 9 is a diagram for describing an operation according to the embodiment.

In Fig. 8, the UE 100 exists in a first cell (PCell) managed by the MeNB 200-1 and a second cell (PSCell or SCell) managed by the SeNB 200-2. The first cell and the second cell overlap at least partially. Further, a T-MeNB 200-3 manages a third cell. The second cell and the third cell overlap at least partially. The first cell and the third cell may overlap at least partially. The first cell and the third cell may be macro cells, and the MeNB 200-1 and the T-MeNB 200-3 may be macro eNBs that manage the macro cells. The second cell may be a small cell, and the SeNB 200-2 may be a small eNB that manages a small cell.

In Fig. 8, a UE 100 is executing the dual connectivity scheme. Specifically, the UE 100 establishes the RRC connection with an MeNB 200-1 which is the master eNB. The UE 100 is in the RRC connected state. On the other hand, additional radio resources are provided from an SeNB 200-2 which is the secondary eNB to the UE 100. The UE 100 performs communication with the MeNB 200-1 and the SeNB 200-2.

Further, the UE 100 is executing the dual connectivity scheme in the first UP architecture. Therefore, the UE 100 performs communication using the EPS bearer #1 passing through the MeNB 200-1 and the EPS bearer #2 (that is, the SCG bearer) passing through the SeNB 200-2 without passing through the MeNB 200-1. The MeNB 200-1 and the SeNB 200-2 are connected to an S-SGW 300-1. The user data of the UE 100 is divided in the S-SGW 300-1. The MeNB 200-1 receives one divided user data from the S-SGW 300-1, and the SeNB 200-2 receives the other divided user data from the S-SGW 300-1.

A T-MeNB 200-3 is not connected to the S-SGW 300-1 but connected to a T-SGW 300-3 as illustrated in Fig. 8.

Here, it is assumed that as the UE 100 moves, the reception level of the radio signal from the MeNB 200-1 has decreased, and the reception level of the radio signal from the T-MeNB 200-3 has increased. In this case, the MeNB 200-1 starts the handover process in which the T-MeNB 200-3 is set as a handover destination on the basis of a measurement report from the UE 100.

Here, a method in which the UE 100 executes the handover from the MeNB 200-1 to the T-MeNB 200-3 while maintaining the connection with the SeNB 200-2, and continues the dual connectivity scheme using the T-MeNB 200-3 as the master eNB is not specified in the specification. Therefore, when the SeNB 200-2 executes the dual connectivity scheme that does not change before and after the handover, the UE 100 first ends the dual connectivity scheme, and after completion of the handover, the UE 100 is able to exchange signaling for initiating the dual connectivity scheme using the T-MeNB 200-3 (target eNB) and the SeNB 200-2 with the T-MeNB 200-3.

Since the master eNB and the secondary eNB are required to be connected with the same SGW in the current specification, the T-MeNB 200-3 and the SeNB 200-2 are unable to execute the dual connectivity scheme when the T-MeNB 200-3 and the SeNB200-2 are not connected to the same S-SGW, particularly, as illustrated in Fig. 8. Therefore, in this case, particularly, the UE 100 is likely to end the dual connectivity scheme and exchange the signaling with the T-MeNB 200-3 after completion of the handover.

As a result of exchanging the signaling, the radio resources for the user data decreases, and the load on the user terminal and the target base station increases.

In this regard, the above-mentioned problems are solved by the following method.

As described above, the UE 100 executes the dual connectivity scheme using the MeNB 200-1 and the SeNB 200-2. The UE 100 measures the reception level (the RSRP, the RSRQ, or the like) of the radio signal and transmits a measurement report which is a measurement result to the MeNB 200-1. The MeNB 200-1 decides that the UE 100 transmits a handover request for executing the handover from the MeNB 200-1 to the T-MeNB 200-3 to the T-MeNB 200-3 on the basis of the measurement report from the UE 100.

As illustrated in Fig. 9, in step S1, the S-MeNB 200-1 serving as the source eNB transmits the handover request to the T-MeNB 200-3 serving as the target eNB.

Here, the handover request includes an identifier (SeNB ID) indicating the secondary eNB executing the dual connectivity scheme with the UE 100 which is a target of the handover. In the present embodiment, the SeNB ID is an identifier indicating the SeNB 200-2. The identifier indicating the secondary eNB may be an identifier indicating the SCG. Accordingly, the T-MeNB 200-3 detects that the UE 100 is executing the dual connectivity scheme with the SeNB 200-2.

Further, the handover request includes information (SCG info) indicating that the data path (the SCG bearer) not passing through the S-MeNB 200-1 is established between the S-SGW 300-1 and the UE 100 via the SeNB 200-2 may be included. Accordingly, the T-MeNB 200-3 detects that SCG bearer is established.

SCG info may be included in information related to handover preparation (Handover Preperation Information).

Further, the handover request may include an identifier (a source side SeNB UE X2AP ID) indicating an X2 application protocol (X2AP) between the SeNB 200-2 and the UE 100. The handover request may include an identifier (a source side MeNB UE X2AP ID) indicating an X2AP between the S-MeNB 200-1 and the UE 100.

Further, the handover request may include an identifier indicating the SGW to which the S-MeNB 200-1 (and the SeNB 200-2) is connected. In the present embodiment, the identifier indicating the SGW indicates the S-SGW 300-1. Accordingly, the T-MeNB 200-3 can detect whether the SGW to which the T-MeNB 200-3 is connected is identical to the SGW to which the SeNB 200-2 is connected.

The T-MeNB 200-3 performs a process of step 2 when the handover request is approved. The following description will proceed under the assumption that the T-MeNB 200-3 approves the handover request.

In step S2, the T-MeNB 200-3 transmits an addition request (SeNB Addition Request) for requesting provision of additional radio resources to the UE 100 in the dual connectivity scheme to the SeNB 200-2 corresponding to the SeNB ID.

The addition request includes configuration information (SCG-ConfigInfo) related to a configuration of the SeNB 200-2 in the dual connectivity scheme. In the present embodiment, the configuration information includes split bearer information indicating establishment of the data path (the split bearer) passing through the T-MeNB 200-3 and the SeNB 200-2 between the T-SGW 300-3 and the UE 100.

Here, when the SeNB ID is included in the handover request, the T-MeNB 200-3 may transmit the addition request including the split bearer information to the SeNB 200-2.

Alternatively, when the SeNB 200-2 is connected to another SGW rather than the T-SGW 300-3 connected with the T-MeNB 200-3, the T-MeNB 200-3 transmits the addition request including the split bearer information to the SeNB 200-2. The T-MeNB 200-3 may determine whether or not the SeNB 200-2 is connected with the T-SGW 300-3 on the basis of the identifier indicating the SGW included in the handover request. Alternatively, the T-MeNB 200-3 may transmit an inquiry about an SGW to which the SeNB 200-2 (or the S-MeNB 200-1 serving as a transmission source of the handover request) is connected to an upper node (for example, the OAM 400). The T-MeNB 200-3 may determine whether or not the SeNB 200-2 is connected with the T-SGW 300-3 on the basis of a response transmitted from the upper node. Alternatively, the T-MeNB 200-3 may determine whether or not the SeNB 200-2 is connected with the T-SGW 300-3 on the basis of information (for example, a past inquiry history) held (stored) in the T-MeNB 200-3.

Since the SeNB 200-2 is connected with the S-SGW 300-1 instead of the T-SGW 300-3, the T-MeNB 200-3 may decide to change the bearer type to the split bearer rather than the SCG bearer. Accordingly, the handover process can be performed in a state that the secondary eNB does not change before and after the handover.

Alternatively, the T-MeNB 200-3 selects the secondary eNB that transmits the addition request regardless of the SeNB ID included in the handover request, and when the selected secondary eNB coincides with the SeNB ID, the T-MeNB 200-3 transmits the addition request including the split bearer information to the SeNB 200-2.

When the dual connectivity scheme with the UE 100 is determined to be executed, the T-MeNB 200-3 may transmit the addition request to the SeNB 200-2 corresponding to the SeNB ID. Alternatively, when the SeNB ID is included in the handover request, the T-MeNB 200-3 may transmit the addition request to the SeNB 200-2 corresponding to the SeNB ID.

Further, the addition request may include the source side SeNB UE X2AP ID included in the handover request. Further, the addition request may include the source side MeNB UE X2AP ID included in the handover request. The SeNB 200-2 can specify a UE serving as the target of the handover request using at least one of the identifiers (the "source side SeNB UE X2AP ID" and the "source side MeNB UE X2AP ID"). The SeNB 200-2 can maintain the context information of the UE 100 serving as the target of the handover request and secure the radio resources.

The addition request may include encryption information (a new S-KeNB) for encrypting the user data in the dual connectivity scheme using the T-MeNB 200-3 and the SeNB 200-2.

Upon receiving the addition request, the SeNB 200-2 determines whether the addition request is approved or rejected. The SeNB 200-2 detects that the T-MeNB 200-3 is requesting the establishment of the split bearer on the basis of the split bearer information.

The following will proceed under the assumption that the SeNB 200-2 approves the addition request. Further, the description will proceed under the assumption that the SeNB 200-2 has established the split bearer.

When the SeNB 200-2 approves the establishment of the split bearer, the SeNB 200-2 suspends processing of data to the UE 100 in the PDCP layer and suspends transmission of data to the UE 100. The processing in the PDCP layer will be described later.

In step S3, the SeNB 200-2 transmits a positive response (SeNB Addition Ack) to the T-MeNB 200-3 in response to the addition request.

The positive response may include SCG configuration information (SCG Configuration) generated in the SeNB 200-2. The SCG configuration information is information of the SCG configured in the UE 100. Specifically, the SCG configuration information is information necessary for an RRC connection reconfiguration message in order for the UE 100 to execute the dual connectivity scheme with the T-MeNB 200-3 and the SeNB 200-2.

Further, the positive response may include an X2-U address related to the split bearer (X2-U addresses for split bearer).

For example, the SeNB 200-2 may suspend the transmission of the user data to the UE 100 in response to the transmission of the positive response to the addition request.

The S-MeNB 200-1 generates T-MCG configuration information (T-MCG Configuration) which is information of the MCG configured in the UE 100. Specifically, the T-MCG configuration information is information necessary for the RRC connection reconfiguration message in order for the UE 100 to execute the dual connectivity scheme with the T-MeNB 200-3 and the SeNB 200-2. The S-MeNB 200-1 includes the SCG configuration information and the T-MCG configuration information in a HO command container.

In step S4, the T-MeNB 200-3 transmits a positive response (HO req Ack) to the S-MeNB 200-1 in response to the handover request.

The positive response includes information related to the RRC connection reconfiguration message (RRC Connection Reconfiguration) configured in the UE 100. Specifically, the positive response includes the HO command container.

In step S5, the S-MeNB 200-1 transmits the RRC connection reconfiguration message to the UE 100. The UE 100 applies a configuration based on the received RRC connection reconfiguration message.

The RRC connection reconfiguration message includes a handover command (HO Cmd) for causing the UE 100 to perform the handover. Further, the RRC connection reconfiguration message (handover command) includes the HO command container.

The UE 100 applies the configuration of changing the bearer type from the SCG bearer established with the SeNB 200-2 to the split bearer on the basis of the SCG configuration information and the T-MCG configuration information included in the HO command container. Further, the UE 100 suspends the transmission/reception performed through the SCG bearer.

In step S6, the UE 100 starts the random access procedure for the T-MeNB 200-3. When the random access procedure is completed, the UE 100 can perform uplink transmission (UL transmission) to the T-MeNB 200-3 after completing the random access procedure. Further, the RRC connection between the UE 100 and the T-MeNB 200-3 is established.

In step S7, after completing the random access procedure, the UE 100 transmits an RRC connection reconfiguration completion message (RRC Connection Reconfiguration complete) to the T-MeNB 200-3.

In step S8, the T-MeNB 200-3 gives a notification indicating that the RRC connection reconfiguration has been completed to the SeNB 200-2.

In step S9, the UE 100 starts the random access procedure for the SeNB 200-2. After completing the random access procedure, the UE 100 can perform uplink transmission (UL transmission) to the SeNB 200-2.

In step S10, the S-MeNB 200-1 transmits an SeNB release request for releasing the secondary eNB to the SeNB 200-2.

In step S11a, the SeNB 200-2 starts an SN transfer process (SN transfer) for the S-MeNB 200-1 in response to the reception of the SeNB release request. The SeNB 200-2 gives a notification indicating at least one of an SN value of data transmitted to the UE 100 and an SN value of data received from the UE 100 to the S-MeNB 200-1.

In step S11b, the S-MeNB 200-1 starts the SN transfer process (SN transfer) for the T-MeNB 200-3. The S-MeNB 200-1 gives a notification indicating at least one of an SN value of data transmitted to the UE 100 and an SN value of data received from the UE 100 to the T-MeNB 200-3. Here, the notification may include the SN value notified of from the S-MeNB 200-1.

In step S12, non-transmitted data which is not transmitted to the UE 100 is transferred to the T-MeNB 200-3.

First, the S-SGW 300-1 divides data (user data) destined for the UE 100, and continues to transmit the divided data to each of the S-MeNB 200-1 and the SeNB 200-2. The S-MeNB 200-1 continues to receive one divided user data, and the SeNB 200-2 continues to receive the other divided user data from the S-SGW 300-1.

Then, the SeNB 200-2 transmits (transfers) the data received from the S-SGW 300-1 to the S-MeNB 200-1 without encrypting it in the PDCP layer. Therefore, the SeNB 200-2 transmits the non-transmitted data (PDCP SDU) which has not yet been transmitted to the UE 100 and not yet been encrypted to the S-MeNB 200-1. Accordingly, the data which has not yet been encrypted is collected in the S-MeNB 200-1.

The S-MeNB 200-1 transmits (transfers) the data received from the S-SGW 300-1 to the T-MeNB 200-3 without encrypting it in the PDCP layer. Accordingly, the S-MeNB 200-1 transmits the non-transmitted data (PDCP SDU) which has not yet been transmitted to the UE 100 and not yet been encrypted to the T-MeNB 200-3. Further, the S-MeNB 200-1 transmits the non-transmitted data (PDCP SDU) received from the SeNB 200-2 to the T-MeNB 200-3. Therefore, the non-transmitted data received from the S-MeNB 200-1 by the T-MeNB 200-3 includes the non-transmitted data transferred from the SeNB 200-2 to the S-MeNB 200-1.

The T-MeNB 200-3 processes the non-transmitted data (PDCP SDU) received from the S-MeNB 200-1 in the PDCP layer. Accordingly, the T-MeNB 200-3 generates the encrypted data (PDCP PDU).

In step S 13, the T-MeNB 200-3 transfers some pieces of encrypted data to the SeNB 200-2 on the basis of a flow control. The flow control is a control based on the RRC connection reconfiguration message (the T-MCG configuration information and the SCG configuration information) notified to the UE 100.

The SeNB 200-2 transmits the transferred data to the UE 100 using the split bearer. Further, the T-MeNB 200-3 transmits the remaining encrypted data to the UE 100. The T-MeNB 200-3 transmits it to the UE 100 using the split bearer not passing through the MCG bearer or the SeNB 200-2.

The SeNB 200-2 is connected to the S-SGW 300-1 and not connected to the T-SGW 300-3, but the SeNB 200-2 is able to execute the dual connectivity scheme in order to receive data transmitted from the T-MeNB 200-3 to the UE 100.

In step S14, the T-MeNB 200-3 gives a notification indicating a switching request (Path Switch Request) for switching the data path to an MME 300-5 which is the upper node. The T-MeNB 200-3 gives a notification indicating the switching request to the MME 300-5 when the SeNB 200-2 is not connected to the T-SGW 300-3 to which the T-MeNB 200-3 is connected.

In step S15, the MME 300-5 switches the connection of the SeNB 200-2 with the SGW from the S-SGW 300-1 to the T-SGW 300-3 in response to the reception of the switching request. The MME 300-5 is switched through an existing Inter SCG HO process. Accordingly, the SeNB 200-2 is able to perform transmission and reception of data of the UE 100 with the T-SGW 300-3.

In step S16, the T-MeNB 200-3 receives data (DL data) transmitted from the T-SGW 300-3 to the UE 100. The T-MeNB 200-3 processes the received data in the PDCP layer and generates encrypted data.

In step S17, similarly to step S13, the T-SGW 300-3 transfers some pieces of encrypted data to the SeNB 200-2 on the basis of the flow control and transmits the remaining encrypted data to the UE 100. The SeNB 200-2 transmits the received data to the UE 100.

As described above, in a series of handover procedures, since the SCG bearer is changed to the split bearer, the UE 100 is able to execute the handover from the S-MeNB 200-1 to the T-MeNB 200-3 while maintaining the connection with the SeNB 200-2 and continue the dual connectivity scheme using the T-MeNB 200-3 as the master eNB. Therefore, it is possible to suppress the occurrence of signaling for initiating the dual connectivity scheme using the T-MeNB 200-3 and the SeNB 200-2 between the UE 100 and the T-MeNB 200-3.

### (First Modified Example)

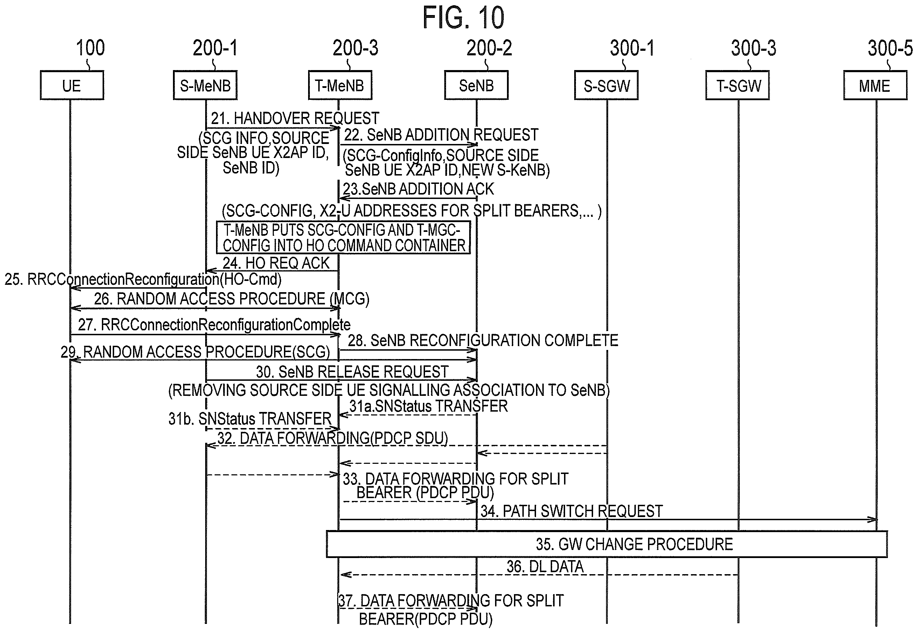

Next, a first modified example of the embodiment will be described with reference to Fig. 10. Fig. 10 is a diagram for describing an operation according to the first modified example of the embodiment. The description will proceed focusing on a difference with the above embodiment, and description of similar portions will be appropriately omitted.

In the first modified example, the SeNB 200-2 transfers the data received from the S-SGW 300-1 to the T-MeNB 200-3 rather than the S-MeNB 200-1.

Steps S21 to S30 correspond to steps S1 to S10.

In step S31a, the SeNB 200-2 initiates the SN transfer process (SN transfer) for the T-MeNB 200-3 rather than the S-MeNB 200-1. The SeNB 200-2 gives a notification indicating at least one of an SN value of data transmitted to the UE 100 and an SN value of data received from the UE 100 to the T-MeNB 200-3. Step S31b corresponds to step S11b.

In step S32, the SeNB 200-2 transfers the data received from the S-SGW 300-1 to the T-MeNB 200-3. Therefore, the T-MeNB 200-3 receives the non-transmitted data (PDCP SDU) from each of the S-MeNB 200-1 and SeNB 200-2. Therefore, the non-transmitted data received from the S-MeNB 200-1 by the T-MeNB 200-3 does not include the non-transmitted data transferred from the SeNB 200-2 to the S-MeNB 200-1. Accordingly, the processing load of the S-MeNB 200-1 can be reduced.

Steps S33 to S37 correspond to steps S13 to S17.

### (Second Modified Example)

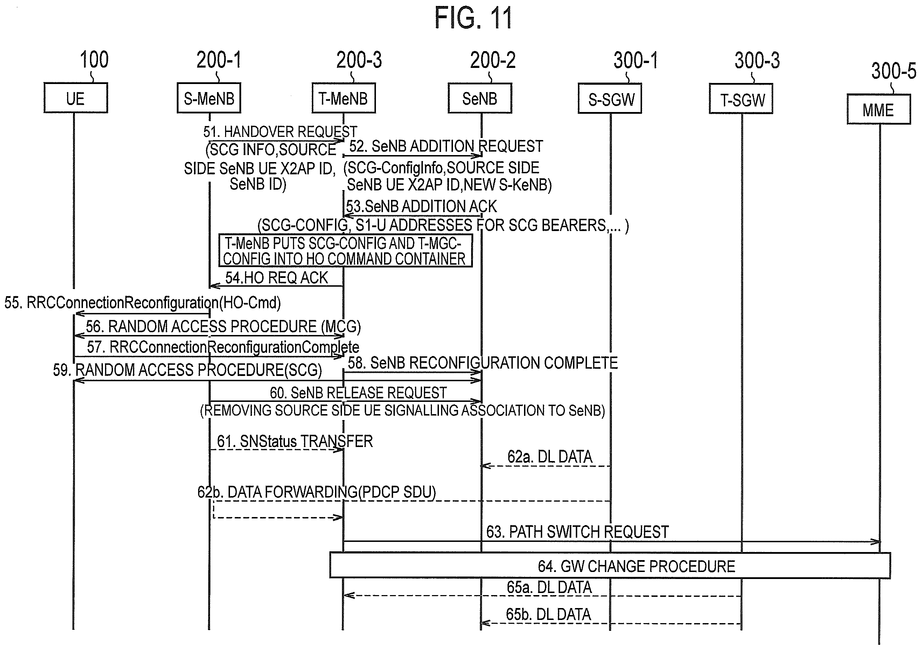

Next, a second modified example of the embodiment will be described with reference to Fig. 11. Fig. 11 is a diagram for describing an operation according to the second modified example of the embodiment. The description will proceed focusing on a difference with the above embodiment, and description of similar portions will be appropriately omitted.

In the second modified example, the SCG bearer is maintained before and after the handover. In other words, the change of the bearer type from SCG bearer to the split bearer is not performed.

Step S51 corresponds to step S1.

In step S52, the T-MeNB 200-3 transmits the addition request (SeNB Addition Request) to the SeNB 200-2 corresponding to the SeNB ID.

After the dual connectivity scheme is determined to be executed by the SCG bearer, the T-MeNB 200-3 includes SCG bearer information indicating that the data path (SCG bearer) passing through the SeNB 200-2 is established between the T-SGW 300-3 and the UE 100 without passing through the MeNB 200-3 in the addition request (specifically, the configuration information (SCG-ConfigInfo). The T-MeNB 200-3 may decide to execute the dual connectivity scheme through the SCG bearer on the basis of information (SCG info) indicating that the SCG bearer included in the handover request is established.

The SeNB 200-2 detects that the T-MeNB 200-3 requests establishment of the SCG bearer (maintaining of the SCG bearer) on the basis of the SCG bearer information. The following description will proceed under the assumption that the SeNB 200-2 approves maintaining of the SCG bearer.

Steps S53 to S60 correspond to steps S3 to S10. Step S61 corresponds to step S11b.

In step 62a, the SeNB 200-2 receives one user data (DL data) divided from the S-SGW 300-1 from the S-SGW 300-1. In step S52, the SeNB 200-2 encrypts the data received from the S-SGW 300-1 on the basis of the encryption information (new S-KeNB) received from the T-MeNB 200-3. Specifically, the SeNB 200-2 encrypts the data in the PDCP layer and generates the encrypted data (PDCP PDU). The SeNB 200-2 receives a notification indicating that the RRC connection reconfiguration has been completed from the T-MeNB 200-3, and then transmits the data encrypted on the basis of the new S-KeNB to the UE 100.

Step S62b corresponds to step S12. Since the S-MeNB 200-1 does not know the new S-KeNB, similarly to step S12, the S-MeNB 200-1 transmits the non-transmitted data (PDCP SDU) which has not yet been transmitted to the UE 100 and not yet been encrypted to the T-MeNB 200-3.

Step S63 corresponds to step S14. The T-MeNB 200-3 gives a notification indicating the switching request (Path Switch Request) for switching the data path to the MME 300-5 which is the upper node.

When the dual connectivity scheme is executed through the SCG bearer, and the SeNB 200-2 is not connected to the T-SGW 300-3 to which the T-MeNB 200-3 is connected, the T-MeNB 200-3 transmits the switching request to the MME 300-5.

The switching request is a request for establishing the data path (SCG bearer) not passing through the T-MeNB 200-3 between the T-SGW 300-3 and the UE 100 via the SeNB 200-2. The switching request includes at least information necessary for establishing the SCG bearer. For example, the necessary information includes information for performing a setting so that the T-SGW 300-3 can transmit the user data designated for the UE 100 to the T-MeNB 200-3 and the SeNB 200-2. Further, the necessary information includes information for performing a setting so that the T-SGW 300-3 can receive the user data transmitted from the UE 100 from the T-MeNB 200-3 and the SeNB 200-2. Specifically, the necessary information includes end point information between the S-MeNB 200-1 and the SeNB 200-2.

Step S64 corresponds to step S15. The MME 300-5 switches the connection of the SeNB 200-2 with the SGW from the S-SGW 300-1 to the T-SGW 300-3 on the basis of the switching request. Further, the MME 300-5 performs a setting so that the SSCG bearer is established between the T-SGW 300-3 and the UE 100.

In step S65a, the T-MeNB 200-3 receives the data (DL data) transmitted from the T-SGW 300-3 to the UE 100. The T-MeNB 200-3 processes the received data in the PDCP layer and generates the encrypted data. The T-MeNB 200-3 transmits the encrypted data to the UE 100.

In step S65b, the SeNB 200-2 receives the data (DL data) transmitted from the T-SGW 300-3 to the UE 100. The SeNB 200-2 processes the received data in the PDCP layer on the basis of the new S-KeNB, and generates the encrypted data. The SeNB 200-2 transmits the encrypted data to the UE 100.

As described above, the UE 100 is able to execute the handover from the S-MeNB 200-1 to the T-MeNB 200-3 while maintaining the connection with the SeNB 200-2 (that is, the SCG bearer) and continue the dual connectivity scheme using the T-MeNB 200-3 as the master eNB. Therefore, it is possible to suppress the occurrence of signaling for initiating the dual connectivity scheme using the T-MeNB 200-3 and the SeNB 200-2 between the UE 100 and the T-MeNB 200-3.

### [Other Embodiments]

In the above embodiment, the T-MeNB 200-3 transmits the addition request to the SeNB 200-2 corresponding to the SeNB ID, but the present application is not limited thereto. The T-MeNB 200-3 may transmit a modification request (SeNB Modification Request) for requesting a change in the context information of the UE 100 in the SeNB 200-2 in the dual connectivity scheme to the SeNB 200-2 corresponding to the SeNB ID. The modification request may include information for requesting a change in resources which are allocated from the SeNB 200-2 to the UE 100 in the dual connectivity scheme. The modification request may include information similar to the above embodiment. Upon receiving the modification request, the SeNB 200-2 performs a similar operation to that in the above embodiment. Using the modification request in addition to the addition request, it is possible to suppress the occurrence of signaling for initiating the dual connectivity scheme, similarly to the above embodiment.

In the above embodiment, the LTE system has been described as an example of the mobile communication system, but the present application is not limited to the LTE system, and the present application may be applied to systems other than the LTE system.

### [Cross Reference]

This application claims the benefit of U.S. provisional application No. 62/112764 filed February 6, 2015, the entire contents of which are incorporated herein by reference.

### INDUSTRIAL APPLICABILITY

The present application is useful in the field of communication.

## Claims

1. A base station capable of executing a dual connectivity scheme, comprising:
a receiver configured to receive, from a source base station, a handover request for causing a user terminal to perform a handover from the source base station to the base station; and
a transmitter configured to transmit, when the handover request includes an identifier indicating a secondary base station executing the dual connectivity scheme with the user terminal, an addition request to the secondary base station corresponding to the identifier, the addition request requesting provision of additional radio resources to the user terminal in the dual connectivity scheme,
wherein the transmitter transmits the addition request including split bearer information indicating that a data path passing through the base station and the secondary base station is established between a gateway apparatus connected with the base station and the user terminal.

2. The base station according to claim 1,
wherein the transmitter is configured to transmit the addition request including the split bearer information when the secondary base station is connected to another gateway apparatus other than the gateway apparatus.

3. The base station according to claim 1,
wherein the transmitter is configured to transmit the addition request including the split bearer information together with the identifier when the handover request includes information indicating that a data path not passing through the source base station is established between the gateway apparatus connected with the secondary base station and the user terminal via the secondary base station.

4. The base station according to claim 1,
wherein the receiver is configured to receive non-transmitted data which has not yet been transmitted to the user terminal and has not yet been encrypted from the source base station, and
the non-transmitted data includes non-transmitted data which is transferred from the other base station to the source base station.

5. The base station according to claim 1,
wherein the receiver is configured to receive non-transmitted data which has not yet been transmitted to the user terminal and has not yet been encrypted from each of the source base station and the other base station.

6. A base station capable of executing a dual connectivity scheme, comprising:
a receiver configured to receive, from the source base station, a handover request for causing a user terminal to perform a handover from a source base station to the base station;
a transmitter configured to transmit, when the handover request includes an identifier indicating a secondary base station executing the dual connectivity scheme to the user terminal, an addition request to the secondary base station corresponding to the identifier, the addition request requesting provision of additional radio resources to the user terminal in the dual connectivity scheme; and
a controller configured to notify an upper node of a request for establishing a data path not passing through the base station between the gateway apparatus and the user terminal via the secondary base station when the gateway apparatus to which the base station is connected is not connected with the secondary base station.
